# EUROPÄISCHE PATENTSCHRIFT

(11) **EP 2 396 369 B1**
(45) Veröffentlichungstag und Bekanntmachung des Hinweises auf die Patenterteilung: **02.10.2013**
(21) Anmeldenummer: 10702504.1
(22) Anmeldetag: 08.02.2010
(51) Int. Cl.: C08K 5/3445, C08L 59/00

(54) **POLYOXYMETHYLENE FÜR DIESELANWENDUNGEN**
POLYOXYMETHYLENES FOR DIESEL APPLICATIONS
POLYOXYMÉTHYLÈNE POUR APPLICATIONS DIESEL

(30) Priorität: 11.02.2009 EP 09152559
(43) Veröffentlichungstag der Anmeldung: 21.12.2011
(73) Patentinhaber: BASF SE, 67056 Ludwigshafen (DE)
(72) Erfinder: SHARAVANAN, Karthikeyan, 68199 Mannheim (DE); DEMETER, Jürgen, 55128 Mainz (DE)
(86) Internationale Anmeldenummer: PCT/EP2010/051456
(87) Internationale Veröffentlichungsnummer: WO 2010/092012

(56) Entgegenhaltungen:
- GB-A- 1 044 863
- JP-A- 2007 119 611
- US-A1- 2007 073 007

## Beschreibung

Die Erfindung betrifft thermoplastische Formmassen, enthaltend
A) 10 bis 99,98 Gew.-% eines Polyoxymethylenhomo- oder - copolymerisates,
B) 0,01 bis 5 Gew.-% eines Imidazols der allgemeinen Formel 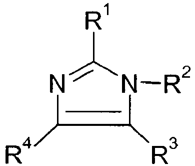 wobei die Reste R¹ bis R⁴ unabhängig voneinander folgende Bedeutung haben:
   R¹ einen Alkylrest mit 1 bis 5 C-Atomen,
   R² bis R⁴ Wasserstoff, einen Alkylrest mit 1 bis 5 C-Atomen,
C) 0,01 bis 5 Gew.-% eines Erdalkalioxides,
D) 0 bis 80 Gew.-% weiterer Zusatzstoffe,
wobei die Summe der Gewichtsprozente der Komponenten A) bis D) 100 % ergibt.

Weiterhin betrifft die Erfindung die Verwendung der erfindungsgemäßen Formmassen zur Herstellung von Fasern, Folien und Formkörpern jeglicher Art, sowie die hierbei erhältlichen Formkörper.

Polyoxymethylene werden oft im Motorbereich eingesetzt, wobei diese in Kontakt mit Dieselkraftstoff kommen, der in diesem Bereich 90°C und darüber heiß ist. Bei diesen Temperaturen ist der Molekulargewichtsabbau ein großes Problem. Darüber hinaus gibt es neue Herausforderungen für diese Thermoplaste, da Biodiesel oder Dieselkraftstoffe mit geringem Schwefelgehalt in den Motoren der neuen Generation eingesetzt werden.

Aus der EP-A 855 424 sind sterisch gehinderte Amine, Benzotriazole, Benzoate und Benzophenone als Stabilisatoren für POM bekannt.

Eine Kombination von Polyalkylenglykolen und ZnO ist beispielsweise aus der US 6,489,388 bekannt, sowie aus der WO 2003/027177 eine Kombination aus Metallhydroxid, Metalloxid und Antioxidantien.

Die Formmassen aus dem Stand der Technik sind bezüglich der Dieselkraftstoffbeständigkeit, insbesondere bei höheren Temperaturen sowie über längere Zeiträume, verbesserungswürdig. Außerdem sind diese POM-Massen für die neuen "Diesel" nur unzureichend geeignet.

Aufgabe der vorliegenden Erfindung war es daher, POM-Formmassen zur Verfügung zu stellen, welche eine gute Dieselkraftstoffbeständigkeit (insbesondere bei höheren Temperaturen und über längere Zeiträume) aufweisen, wobei dies auch neue Dieselkraftstoffe und Dieselmischungen einschließen soll.

Darüber hinaus sollte die Säurebeständigkeit, Chlorbeständigkeit (Ausbleichen) und Oxidationsbeständigkeit verbessert werden.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 99,98 Gew.-%, vorzugsweise 20 bis 99,48 Gew.-% und insbesondere 25 bis 98,95 Gew.-% eines Poly-oxymethylenhomo- oder -copolymerisats.

Derartige Polymerisate sind dem Fachmann an sich bekannt und in der Literatur beschrieben.

Ganz allgemein weisen diese Polymere mindestens 50 mol.-% an wiederkehrenden Einheiten -CH₂O- in der Polymerhauptkette auf.

Die Homopolymeren werden im Allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH₂O-noch bis zu 50, vorzugsweise 0,1 bis 20, insbesondere 0,3 bis 10 mol.-% und ganz besonders bevorzugt 0,2 bis 2,5 mol.-% an wiederkehrenden Einheiten aufweisen, 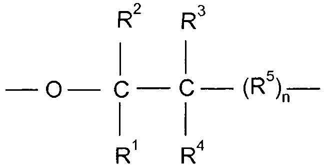 wobei R¹ bis R⁴ unabhängig voneinander ein Wasserstoffatom, eine C₁ - bis C₄ - Alkylgruppe oder eine halogensubstituierte Alkylgruppe mit 1 bis 4 C-Atomen und R⁵ eine -CH₂-, CH₂O-, eine C₁ - bis C₄ -Alkyl- oder C₁ - bis C₄ -Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 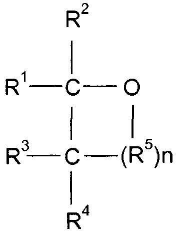 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 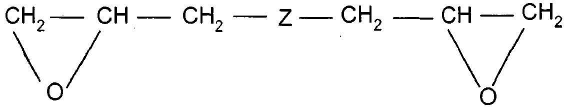 und/oder 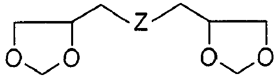 wobei Z eine chemische Bindung, -O-, -ORO- (R= C₁-bis C₈-Alkylen oder C₃-bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so dass sich hier nähere Angaben erübrigen.

Die bevorzugten Polyoxymethylencopolymere haben Schmelzpunkte von mindestens 160 bis 170°C (DSC, ISO 3146) und Molekulargewichte (Gewichtsmittelwert) Mw im Bereich von 5000 bis 300000, vorzugsweise von 7000 bis 250000 (GPC, Standard PMMA).

Endgruppenstabilisierte Polyoxymethylenpolymerisate, die an den Kettenenden C-C-Bindungen aufweisen, werden besonders bevorzugt.

Als Komponente B) enthalten die erfindungsgemäßen Formmassen mindestens ein Imidazol der allgemeinen Formel 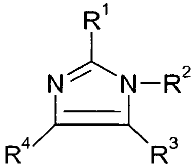 wobei die Reste R¹ bis R⁴ unabhängig voneinander folgende Bedeutung haben:
- R¹: einen Alkylrest mit 1 bis 5, vorzugsweise 1 bis 4 C-Atomen, insbesondere einen Methylrest oder Ethylrest,
- R² bis R⁴: Wasserstoff oder einen Alkylrest mit 1 bis 5, vorzugsweise 1 bis 4 C-Atomen, insbesondere Wasserstoff oder einen Methylrest oder einen E-thylrest.

Bevorzugte Imidazole sind: 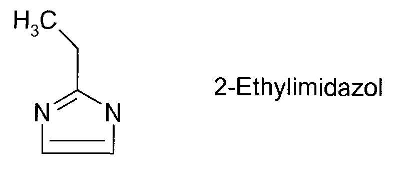 und

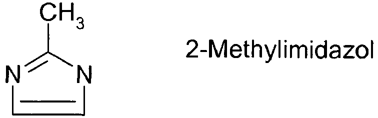

Imidazol kann man aus Glyoxal, Ammoniak und Formaldehyd synthetisieren, daher der veraltete Name Glyoxalin; es ist auch aus Bromacetaldehyd-ethylenacetal durch Erhitzen mit Formamid auf 180°C unter Einleiten von Ammoniak erhältlich.

Imidazol-Derivate werden durch Einwirkung von Formamid und Formaldehyd auf Benzil und andere substituierte 1,2-Diketone bei 180 - 200°C erhalten. Durch Kondensation von α-Halogenketonen mit Amidinen sind ebenfalls Imidazol-Derivate erhältlich.

Als Komponente C) enthalten die erfindungsgemäßen Formmassen 0,01 bis 5, vorzugsweise 0,5 bis 4 und insbesondere 1 bis 3 Gew.-% eines Erdalkalioxides. Bevorzugt sind Ca, Ba oder Sr-Oxide, wobei MgO besonders bevorzugt ist.

MgO, Mᵣ 40, 30. Lockeres, weißes Pulver oder oktaedrisch bzw. würfelförmige Kristalle mit einer Dichte 3,58, Schmp. 2827+/- 30°C, Sdp. ca. 3600°C, in Wasser unlöslich, wird jedoch durch dieses langsam in schwer lösliches Magnesiumhydroxid umgewandelt. Kristallines MgO entsteht z. B. beim Verbrennen von Mg, ferner beim Glühen von Magnesiumhydroxid, Magnesiumcarbonat, Magnesiumnitrat, Magnesit, durch Zersetzung von Magnesiumchlorid mit überhitztem Wasserdampf, thermisch aus Bittersalz bzw. Kieserit. Bei der Gewinnung aus Meerwasser wird mit Hilfe von gebranntem u. gelöschtem Kalk oder Dolomit Mg (OH)₂ gefällt, das abgetrennt und calciniert wird.

Bevorzugtes MgO ist erfindungsgemäß ein MgO, welches nur sehr geringe Anteile an Metallverunreinigungen (außer Alkalimetalle) enthält, vorzugsweise unter 10000 ppm, insbesondere unter 7000 ppm.

Die bevorzugte mittlere Teilchengröße beträgt von 10 bis 200 µm, vorzugsweise 20 bis 100 µm und insbesondere 50 bis 80 µm. (bestimmt durch Siebanalyse)

Geeignete MgO's sind im Handel von Acros Organics erhältlich und weisen in der Regel unter 10000 ppm Nebenbestandteile anderer Oxide wie CaO, SiO₂, Al₂O₃, Fe₂O₃ und SO₄ -haltige Salze auf.

Als Komponente D) können die erfindungsgemäßen Formmassen 0 bis 80 Gew.-%, vorzugsweise 0 bis 50 Gew.-% und insbesondere 0 bis 40 Gew.-% weitere Zusatzstoffe enthalten.

Als Komponente D) können die erfindungsgemäßen Formmassen 0,01 bis 2 Gew.-%, vorzugsweise 0,02 bis 0,8 Gew.-% und insbesondere 0,03 bis 0,4 Gew.-% Talkum enthalten, welches ein hydratisiertes Magnesiumsilikat der Zusammensetzung Mg₃[(OH)₂/Si₄O₁₀] oder 3 MgO . 4 SiO₂. H₂O ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na und K anwesend sein, wobei die OH-Gruppe teilweise durch Fluorid ersetzt sein kann.

Besonders bevorzugt wird Talkum eingesetzt, dessen Teilchengrößen zu 100 % < 20 µm beträgt. Die Teilchengrößenverteilung wird üblicherweise durch Sedimentationsanalyse DIN 6616-1 bestimmt und beträgt vorzugsweise:

| | |
|---|---|
| < 20 µm | 100 Gew.-% |
| < 10 µm | 99 Gew.-% |
| < 5 µm | 85 Gew.-% |
| < 3 µm | 60 Gew.-% |
| < 2 µm | 43 Gew.-% |

Derartige Produkte sind im Handel als Micro-Talc I.T. extra (Fa. Norwegian Talc Minerals) erhältlich.

Als sterisch gehinderte Phenole D) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 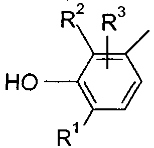 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 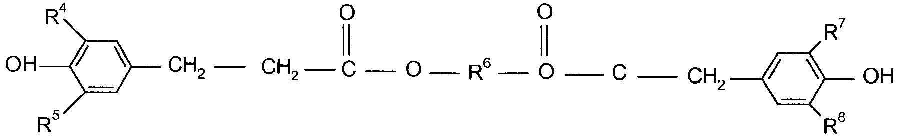 wobei R⁴, R⁵, R⁷ und R⁸ unabhängig voneinander C₁-C₈-Alkylgruppen, die ihrerseits substituiert sein können (mindestens eine davon ist eine sterisch anspruchsvolle Gruppe) und R⁶ einen zweiwertigen aliphatischen Rest mit 1 bis 10 C-Atomen, der in der Hauptkette auch C-O-Bindungen aufweisen kann.

Bevorzugte Verbindungen, die dieser Formen entsprechen, sind

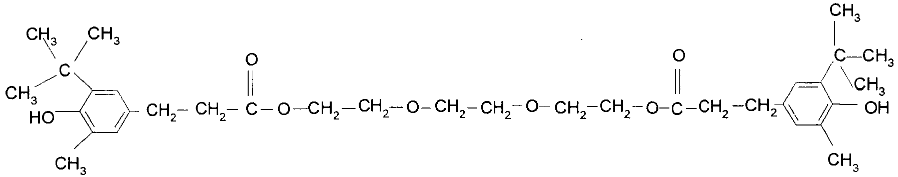

### (Irganox® 245 der Firma BASF SE)

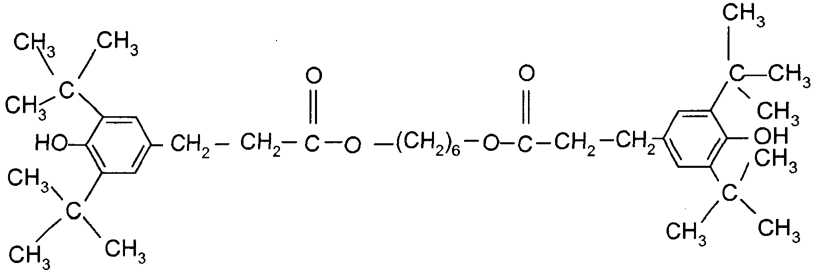

### (Irganox® 259 der Firma BASF SE)

### Beispielhaft genannt seien als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distiaryl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin und N,N'-Hexamethylen-bis-3,5-di-tert.-butyl-4-hydroxyhydrocinnamid.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] und das vorstehend beschriebene Irganox® 245 der Firma Ciba Geigy, das besonders gut geeignet ist.

Die Antioxidantien (D), die einzeln oder als Gemische eingesetzt werden können, können in einer Menge von 0,005 bis zu 2 Gew.-%, vorzugsweise von 0,1 bis 1,0 Gew.-%, bezogen auf das Gesamtgewicht der Formmassen A) bis D) eingesetzt werden.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Die als Komponenten D) verwendbaren Polyamide sind an sich bekannt. Halbkristalline oder amorphe Harze, wie sie z.B. in der Encyclopedia of Polymer Science and Engineering, Vol. 11, S. 315 bis 489, John Wiley & Sons, Inc., 1988, beschreiben werden, können eingesetzt werden, wobei der Schmelzpunkt des Polyamids vorzugsweise unter 225°C, vorzugsweise unter 215°C liegt.

Beispiele hierfür sind Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methan-dodekansäurediamid oder die durch Ringöffnung von Lactamen, z.B. Polycaprolactam oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicyclohexylmethan und Adipinsäure genannt. Ein Beispiel hierfür ist das unter der Bezeichnung Ultramid® 1 C von der BASF SE vertriebene Produkt.

Weitere geeignete Polyamide werden von der Firma Du Pont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt von 0,001 bis zu 2 Gew.-%, vorzugsweise 0,005 bis 1,99 Gew.-%, bevorzugt 0,01 bis 0,08 Gew.-%.

Durch die Mitverwendung eines Polykondensationsprodukts aus 2,2-Di-(4-hydroxyphenyl)propan (Bisphenol A) und Epichlorhydrin kann in manchen Fällen die Dispergierbarkeit der verwendeten Polyamide verbessert werden.

Derartige Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Firma Shell). Das Molekulargewicht der Polykondensate kann in weiten Grenzen variieren; prinzipiell sind die im Handel erhältlichen Typen sämtlich geeignet.

Als Komponente D) können die erfindungsgemäßen Polyoxymethylen-Formmassen 0,002 bis 2,0 Gew.-%, vorzugsweise 0,005 bis 0,5 Gew.-% und insbesondere 0,01 bis 0,3 Gew.-%, bezogen auf das Gesamtgewicht der Formmassen eines oder mehrerer der Erdalkalisilikate und/oder Erdalkaliglycerophosphate enthalten. Als Erdalkalimetalle zur Bildung der Silikate und Glycerophosphate haben sich vorzugsweise Calcium und insbesondere Magnesium vorzüglich bewährt. Anwendung finden zweckmäßigerweise Calciumglycerophosphat und vorzugsweise Magnesiumglycerophosphat und/oder Calciumsilikat und vorzugsweise Magnesiumsilikat, wobei als Erdalkalisilikate, insbesondere solche bevorzugt sind, die durch die Formel

Me . x SiO₂ . n H₂O

beschrieben werden, in der bedeuten
- Me: ein Erdalkalimetall, vorzugsweise Calcium oder insbesondere Magnesium,
- x: eine Zahl von 1,4 bis 10, vorzugsweise 1,4 bis 6 und
- n: eine Zahl gleich oder größer als 0, vorzugsweise 0 bis 8.

Die Verbindungen D) werden vorteilhafterweise in feingemahlener Form eingesetzt. Produkte mit einer durchschnittlichen Teilchengröße von kleiner als 100 µm, vorzugsweise von kleiner als 50 µm sind besonders gut geeignet.

Vorzugsweise Anwendung finden Calcium- und Magnesiumsilikate und/oder Calcium- und Magnesiumglycerophosphate. Diese können beispielsweise durch die folgenden Kenndaten näher spezifiziert werden:
Calcium- bzw. - Magnesiumsilikat:
   Gehalt an CaO bzw. MgO: 4 bis 32 Gew.-%, vorzugsweise 8 bis 30 Gew.-% und insbesondere 12 bis 25 Gew.-%,
   Verhältnis SiO₂ : CaO bzw. SiO₂ : MgO (mol/mol) : 1,4 bis 10, vorzugsweise 1,4 bis 6 und insbesondere 1,5 bis 4,
   Schüttgewicht: 10 bis 80 g/100 ml, vorzugsweise 10 bis 40 g/100 ml und durchschnittliche Korngröße: kleiner als 100 µm,
   vorzugsweise kleiner als 50 µm und
Calcium- bzw. Magnesiumglycerophosphate:
   Gehalt an CaO bzw. MgO: größer als 70 Gew.-%, vorzugsweise größer als 80 Gew.-%
   Glührückstand: 45 bis 65 Gew.-%
   Schmelzpunkt: größer als 300°C und
   durchschnittliche Korngröße: kleiner als 100 µm, vorzugsweise kleiner als 50 µm.

Als Komponente D) können die erfindungsgemäßen Formmassen von 0,01 bis 5, vorzugsweise von 0,09 bis 2 und insbesondere von 0,1 bis 0,7 Gew.-% mindestens eines Esters oder Amids gesättigter oder ungesättigter aliphatischer Carbonsäuren mit 10 bis 40 C-Atomen bevorzugt 16 bis 22 C-Atomen mit Polyolen oder aliphatischen gesättigten Alkoholen oder Aminen mit 2 bis 40 C-Atomen bevorzugt 2 bis 6 C-Atomen oder einem Ether, der sich von Alkoholen und Ethylenoxid ableitet, enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung aus Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmittat, Glycerintrilautrat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weiterhin geeignet sind Polyetherpolyole oder Polyesterpolyole, welche mit ein- oder mehrwertigen Carbonsäuren, vorzugsweise Fettsäuren verestert bzw. verethert sind. Geeignete Produkte sind im Handel beispielsweise als Loxiol® EP 728 der Firma Henkel KGaA erhältlich.

Bevorzugte Ether, welche sich von Alkoholen und Ethylenoxid ableiten, weisen die allgemeine Formel

RO (CH₂ CH₂ O)ₙ H

auf, in der R eine Alkylgruppe mit 6 bis 40 Kohlenstoffatomen und n eine ganze Zahl größer/gleich 1 bedeutet.

Insbesondere bevorzugt für R ist ein gesättigter C16 bis C18 Fettalkohol mit n 50, welcher als Lutensol® AT 50 der Firma BASF SE im Handel erhältlich ist.

Als weitere Komponenten D) können die erfindungsgemäßen Formmassen 0,0001 bis 1 Gew.-%, vorzugsweise 0,001 bis 0,8 Gew.-% und insbesondere 0,01 bis 0,3 Gew.-% weitere Nukleierungsmittel enthalten.

Als Nukleierungsmittel kommen alle bekannten Verbindungen in Frage, beispielsweise Melamincyanurat, Borverbindungen wie Bornitrid, Kieselsäure, Pigmente wie z.B. Heliogenblau® (Kupferphtalocyaninpigment; eingetragenes Warenzeichen der BASF SE).

Als Füllstoffe sind in Mengen bis zu 50 Gew.-%, vorzugsweise 5 bis 40 Gew.-% seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete Füllstoffe sind beispielsweise Calciumcarbonat oder Glaskugeln, vorzugsweise in gemahlener Form oder Mischungen dieser Füllstoffe.

Als weitere Zusatzstoffe seien, in Mengen bis zu 50, vorzugsweise 0 bis 40 Gew.-%, schlagzäh modifizierende Polymere (im Folgenden auch als kautschukelastische Polymerisate oder Elastomere bezeichnet) genannt.

Bevorzugte Arten von solchen Elastomeren sind die sog. EthylenPropylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/ 100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien,5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder II zum Monomerengemisch in den Kautschuk eingebaut 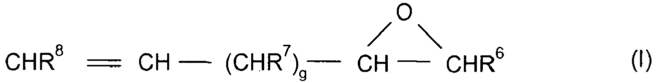 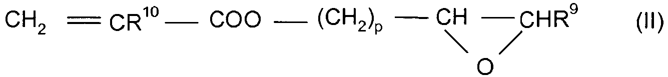 wobei R⁶ - R¹⁰ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R⁶ bis R⁸ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen-enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen,
- 0,1 bis 40: insbesondere 0,3 bis 20 Gew.-% Glycidylacrylat und/oder Glycidylmethacrylat, (Meth)acrylsäure und/oder Maleinsäureanhydrid und
- 1 bis 50,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird u.a. durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino- oder Amidgruppen sowie funktionelle Gruppen, die durch Mitverwendung von Monomeren der allgemeinen Formel 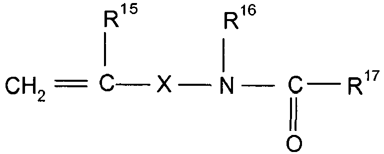 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR¹⁸
- R¹⁸: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 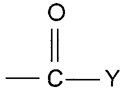
- Y: OZ oder NH-Z und
- Z: eine C₁ bis C₁₀-Alkylen - oder C₆ bis C₁₂-Arylengruppe

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat, Butandioldiacrylat und Dihydrodicyclopentadienylacrylat sowie die in der EP-A 50 265 beschriebenen Verbindungen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomeren; für nähere Einzelheiten sei hier beispielsweise auf die US-PS 4 148 846 verwiesen.

Im Allgemeinen beträgt der Anteil dieser vernetzenden Monomeren an der Komponente C) bis zu 5 Gew.-%, vorzugsweise nicht mehr als 3 Gew.-%, bezogen auf C).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)-acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere C) können auch nach anderen üblichen Verfahren, z.B. durch Suspensionspolymerisation, hergestellt werden.

Als weitere geeignete Elastomere seien thermoplastische Polyurethane genannt, welche z. B. in der EP-A 115 846, EP-A 115 847 sowie EP-A 117 664 beschrieben sind.

Selbstverständlich können auch Mischungen der vorstehend aufgeführten Kautschuktypen eingesetzt werden.

Die erfindungsgemäßen Formmassen können noch weitere übliche Zusatzstoffe und Verarbeitungshilfsmittel enthalten. Nur beispielhaft seien hier Zusätze zum Abfangen von Formaldehyd (Formaldehyd-Scavenger), Weichmacher, Haftvermittler und Pigmente genannt. Der Anteil solcher Zusätze liegt im Allgemeinen im Bereich von 0,001 bis 5 Gew.-%.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die Komponente B) und C) sowie gegebenenfalls die Komponente(n) D) können in einer bevorzugten Herstellungsform vorzugsweise bei Raumtemperaturen auf das Granulat von A) aufgebracht und anschließend extrudiert werden.

Aus den Formmassen lassen sich Formkörper (auch Halbzeuge, Folien, Filme und Schäume) aller Art herstellen. Die Formmassen zeichnen sich durch eine sehr gute Dieselbeständigkeit, Chlorbeständigkeit und Lösungsmittelbeständigkeit bei gleichzeitig guter Mechanik und thermischer Stabilität aus.

Insbesondere ist die Verarbeitung der einzelnen Komponenten (ohne Verklumpung oder Verbackung) problemlos und in kurzen Zykluszeiten möglich, so dass insbesondere dünnwandige Bauteile als Anwendung in Frage kommen.

Diese eignen sich zur Herstellung von Fasern und Monofilen, Folien und Formkörpern jeglicher Art, insbesondere für Anwendungen der folgenden Art:
Bürstenaufsätze für elektrische Zahnbürsten,
Ventilkörper und Ventilgehäuse für WC-Spülungen,
Auslaufarmaturen und Funktionsteile von Armaturen, z.B. Einhebelmischern,
Duschköpfe und medienführende Innenteile,
Düsen, Lager und Steuerungselemente für Bewässerungs- und Beregnungssysteme und Scheinwerferwaschanlagen,
Gehäuse für Wasserfilter,
Brüheinheiten für Kaffeezubereitungsanlagen,
Aerosoldosierventile und Funktionsteile für Sprays,
Rollen und Funktionsteile für Schubladenführungen,
Behälter, Verschlusskappen und Verstellmechanismen für Deostifte, Lippenstifte, Kosmetikartikel,
Lagerelemente, Führungs- und Gleitbuchsen für den Maschinen- und Kraftfahrzeugbau,
Zahnräder, Spindeln, Schnecken und andere Komponenten für Übersetzungs-, Verstell- und Schaltgetriebe,
Laufbänder,
Flüssigkeitsbehälter, Deckel und Verschlüsse für Flüssigkeiten, u.a. im Kraftfahrzeugbau,
Tankdeckel, Tankflansche, Filter, Gehäuse für Filter, Rohre, Staugehäuse, Roll-over-Ventile von Kraftstoffanlagen im Kraftfahrzeugbau,
Ansaugrohre,
Gaszähler.

Für den Küchen- und Haushaltsbereich ist der Einsatz des fließverbesserten POM zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte möglich.

### Beispiele

Es wurden folgende Komponenten eingesetzt:

### Komponente A)

Polyoxymethylen-Copolymerisat aus 98,8 Gew.-% Trioxan und 1,2 Gew.-% Butandiolformal. Das Produkt enthielt noch ca. 6 bis 8 Gew.-% nicht umgesetztes Trioxan und 5 Gew.-% thermisch instabile Anteile. Nach Abbau der thermisch instabilen Anteile hatte das Copolymer eine Schmelzvolumenrate MVR von 9,5 cm³/10 Min. (Schmelzetemperatur 190°C, Nennlast 2,16 kg, nach ISO 1133).

### Komponente B/1:

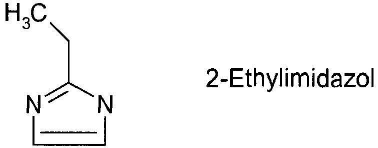

### Komponente B/2:

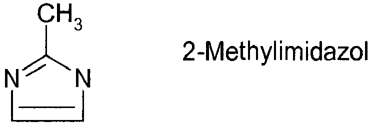

### Vergleichskomponenten B/1V

Tinuvin® 622, CAS-Nr. 65447-77-0 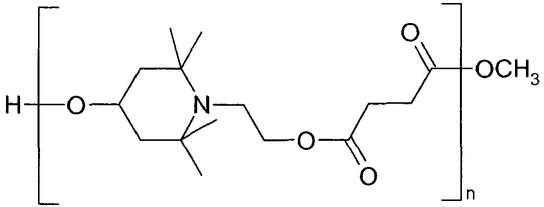 B/2V
1-Methylimidazol
B/3V
2-Phenylimidazol
B/4V
Imidazol
B/5V

Polyamidin: 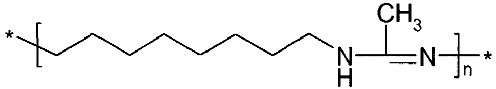 n = 23
Mₙ = 3871 g/mol

### Komponente C)

MgO d₅₀ = 73 µm

### Komponente D1)

Antioxidans Irganox® 245 der Firma Ciba Geigy:

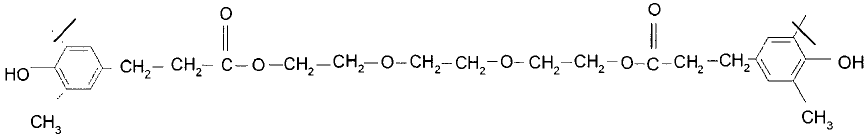

### Komponente D2:

Synthetisches Magnesiumsilicat Ambosol® der Firma Societé Nobel, Puteaux mit folgenden Eigenschaften:

| | |
|---|---|
| Gehalt an MgO | ≥14,8 Gew.-% |
| Gehalt an SiO₂ | ≥59 Gew.-% |
| Verhältnis SiO₂:MgO | 2,7 mol/mol |
| Schüttdichte | 20 bis 30 g/100 ml |
| Glühverlust | < 25 Gew.-% |

### Komponente D3)

Glycerindistearat Loxiol® VP 1206 der Firma Henkel KGaA

### Komponente D4)

Polyamid-Oligomeres mit einem Molekulargewicht von etwa 3000 g/mol, hergestellt aus Caprolactam, Hexamethylendiamin, Adipinsäure und als Molekulargewichtsregler Propionsäure in Anlehnung an die Beispiele 5-4 der US-A 3,960,984 ("PA-dicapped").

### Komponente D5)

Irganox® 1010 FF

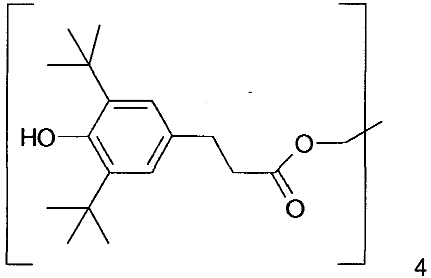

### Komponente D6)

### Melaminformaldehydkondensat

Zur Herstellung der Formmassen wurde die Komponente A mit den u.g. Mengen der Komponenten D1 bis D6 in einem Trockenmischer bei einer Temperatur von 23°C gemischt. Die so erhaltene Mischung wurde mit B und C in einem Doppelschneckenextruder (ZSK 30 der Fa. Werner & Pfleiderer) mit Entgasungsvorrichtung eingebracht, bei 220°C homogenisiert, entgast und das homogenisierte Gemisch durch eine Düse als Strang ausgepresst und granuliert.

Komponente A in den Beispielen enthielt jeweils

| | |
|---|---|
| D1 | 0,35 Gew.-% |
| D2 | 0,05 Gew.-% |
| D3 | 0,15 Gew.-% |
| D4 | 0,04 Gew.-% |
| D5 | 0,1 Gew.-% |
| D6 | 0,2 Gew.-% |

Es wurden folgende Messungen durchgeführt:
Der Gewichtsverlust, Mechanik(Zugversuch) (an 4 mm dicken Prüfkörpern, ISO 527 Type 1 A) und 4 mm dicken Prüfkörpern für die Charpy-Schlagzähigkeit (ISO 179/1 eA) wurden vor und nach Lagerung in
   1) Haltermann CEC 91-A-81 bei 100°C (Badwechsel 1 x in 14 Tagen) und
   2) Mischung aus 75 % Diesel CEC RF 06-03 + 25 % Biodiesel (DIN EN 14214) bei 110°C (Badwechsel 2 x die Woche) gemessen.

### Erfindungsgemäße Beispiele

| | |
|---|---|
| Beispiel 1: | A) + 0,5 B/1 + 2 C |
| Beispiel 2: | A) + 0,5 B/2 + 2 C |

### Vergleichsbeispiele

| | |
|---|---|
| V1 | A + 0,8 B/1V |
| V2 | A + 0,5 B/2V + 2C |
| V3 | A + 0,1 B/3V + 2C |
| V4 | A + 0,1 B/4V + 2C |
| V5 | A + 0,5 B/5V + 2C |

Die Ergebnisse der Messungen sind der Tabelle zu entnehmen.

| | Haltermann Diesel CEC RF 91-A-81 | | | | | |
|---|---|---|---|---|---|---|
| Beispiele | E-Modul | Streckspannung | Streckdehnung | Bruchdehnung | Kerbschlagzähigkeit | Masseverlust |
| | [Mpa] | [Mpa] | [%] | [%] | [KJ/m²] | [%] |
| V5 - 0 Tage | 3080 | 66.9 | 8.42 | 20.9 | 4.47 | 0 |
| V5 - 7 Tage | 2766 | 67.6 | 9.95 | 16.2 | 3.43 | -5.7 |
| V5 - 14 Tage | 2761 | 67.2 | 8.56 | 11.3 | 5.71 | -15 |
| V5 - 28 Tage | 2663 | 65.9 | 9.99 | 14.8 | 5.59 | -15.8 |
| V5 - 56 Tage | 2788 | 65.4 | 8.91 | 12.8 | 4.35 | -17.84 |
| V2 - 0 Tage | 2936 | 66 | 8.82 | 28.3 | 5.52 | 0 |
| V2 - 7 Tage | 2710 | 67.5 | 10.2 | 23.8 | 5.31 | 0.31 |
| V2 - 14 Tage | 2851 | 69.8 | 10.4 | 18.8 | 4.81 | 0.35 |
| V2 - 28 Tage | 2570 | 65 | 10.9 | 16.6 | 5.55 | -0.24 |
| V2 - 56 Tage | 2723 | 65.8 | 10.4 | 15.1 | 3.26 | -3.1 |
| V3 - 0 Tage | 3017 | 66.9 | 8.76 | 26.7 | 5.48 | 0 |
| V3 -7 Tage | 2697 | 67.6 | 10.8 | 29 | 5.23 | 0.61 |
| V3 - 14 Tage | 2804 | 69.1 | 10.7 | 20.9 | 5.55 | -0.5 |
| V3 - 28 Tage | 2598 | 66.2 | 11.2 | 20.8 | 5.74 | -3.69 |
| V3 - 56 Tage | 2733 | 66.3 | 10.6 | 14.6 | 3.07 | -6.44 |
| V4 - 0 Tage | 2969 | 66.8 | 8.78 | 26.1 | 5.52 | 0 |
| V4 - 7 Tage | 2716 | 67.6 | 10.6 | 28.4 | 5.31 | 0.55 |
| V4 -14 Tage | 2737 | 68.8 | 11.1 | 24.4 | 5.41 | 0.61 |
| V4 - 28 Tage | 2616 | 66.8 | 11.9 | 25.3 | 4.8 | 0.3 |
| V4 - 56 Tage | 2676 | 65.4 | 11.2 | 12 | 5.36 | -1.44 |
| V 1 - 0 Tage | 2914 | 67.3 | 9.81 | 31.9 | 5.41 | 0 |
| V 1 - 7 Tage | 2794 | 68.7 | 10.8 | 21.8 | 3.3 | -2.8 |
| V 1 - 14 Tage | 2819 | 69.2 | 10.7 | 19.7 | 5.62 | -14 |
| V 1 - 28 Tage | 2755 | 68.1 | 10.3 | 17.6 | 7.99 | -33.64 |
| V 1 - 56 Tage | | | | | | -73.8 |
| Beispiel 1 - 0 Tage | 2957 | 67.1 | 8.79 | 24 | 5.44 | 0 |
| Beispiel 1 - 7 Tage | 2771 | 68.1 | 10.2 | 18.4 | 4.7 | 0.51 |
| Beispiel 1- 14 Tage | 2680 | 67.1 | 10.9 | 16.4 | 5.2 | 0.29 |
| Beispiel 1 - 28 Tage | 2665 | 67.3 | 11 | 22.2 | 5.19 | 0.52 |
| Beispiel 1 - 56 Tage | 2699 | 65.9 | 10.5 | 13.2 | 5.39 | -0.63 |
| Beispiel 2 - 0 Tage | 2980 | 67.2 | 8.54 | 25.7 | 5.04 | 0 |
| Beispiel 2 - 7 Tage | 2768 | 68 | 10.1 | 24.4 | 5.2 | 0.41 |
| Beispiel 2 - 14 Tage | 2703 | 67 | 10.6 | 20.1 | 5.37 | 0.16 |
| Beispiel 2 - 28 Tage | 2647 | 67.1 | 11.1 | 24.1 | 5.4 | 0.26 |
| Beispiel 2 - 56 Tage | 2665 | 65.7 | 10.4 | 14.2 | 4.53 | -0.23 |

| 75 % Diesel CEC RF 06-03 + 25 % Biodiesel DIN EN 14214 | | | | | | |
|---|---|---|---|---|---|---|
| Beispiele | E-Modul | Streckspannung | Streckdehnung | Bruchdehnung | Kerbschlagzähigkeit | Masseverlust |
| | [Mpa] | [Mpa] | [%] | [%] | [KJ/m²] | [%] |
| V5 - 0 Tage | 3080 | 66.9 | 8.42 | 20.9 | 4.47 | 0 |
| V5 - 7 Tage | 2614 | 67.5 | 12.3 | 16.4 | 3.94 | 0.78 |
| V5 - 14 Tage | 2529 | 66.8 | 12.6 | 14.1 | 3.45 | 0.7 |
| V5 - 28 Tage | 2518 | 65.7 | 8.68 | 8.68 | 1.58 | 0.49 |
| V5 - 56 Tage | 2416 | 55.9 | 5.73 | 5.73 | 1.49 | -0.07 |
| V2 - 0 Tage | 2936 | 66 | 8.82 | 28.3 | 5.52 | 0 |
| V2 - 7 Tage | 2617 | 67.3 | 12.3 | 27.3 | 5.34 | 0.33 |
| V2 - 14 Tage | 2512 | 66.5 | 12.9 | 20 | 5.37 | 0.29 |
| V2 - 28 Tage | 2438 | 63.8 | 7.59 | 7.59 | 3.19 | 0.04 |
| V2 - 56 Tage | 2278 | 49.8 | 4.51 | 4.51 | 1.53 | -0.8 |
| V3 - 0 Tage | 3017 | 66.9 | 8.76 | 26.7 | 5.48 | 0 |
| V3 - 7 Tage | 2637 | 67.9 | 12.3 | 27.2 | 5.4 | 0.53 |
| V3 - 14 Tage | 2539 | 67.2 | 12.7 | 21.8 | 5.15 | 0.6 |
| V3 - 28 Tage | 2476 | 65.2 | 9.74 | 9.97 | 3.63 | 0.44 |
| V3 - 56 Tage | 2369 | 50.9 | 4.46 | 4.46 | 1.51 | -0.05 |
| V4 - 0 Tage | 2969 | 66.8 | 8.78 | 26.1 | 5.52 | 0 |
| V4 - 7 Tage | 2616 | 67.6 | 12.2 | 19.3 | 5.26 | 0.41 |
| V4 - 14 Tage | 2521 | 66.6 | 12.4 | 15.9 | 4.76 | 0.47 |
| V4 - 28 Tage | 2352 | 52.7 | 4.25 | 4.25 | 1.69 | 0.03 |
| V4 - 56 Tage | 2322 | 45.2 | 3.58 | 3.58 | 1.48 | -1.16 |
| V1 - 0 Tage | 2836 | 66.6 | 9.29 | 32.6 | 5.42 | 0 |
| V1- 7 Tage | 2486 | 67.1 | 13.1 | 35.3 | 5.26 | 0.6 |
| V1 - 14 Tage | 2370 | 65.9 | 13.7 | 37.6 | 5.98 | 0.75 |
| V1 - 28 Tage | 2254 | 65.5 | 14.7 | 26.1 | 5.15 | 0.85 |
| V1 - 56 Tage | 2360 | 56.6 | 5.25 | 5.25 | 2.53 | 0.44 |
| Beispiel 1 - 0 Tage | 2957 | 67.1 | 8.79 | 24 | 5.44 | 0 |
| Beispiel 1 - 7 Tage | 2645 | 68.1 | 11.7 | 21.5 | 4.6 | 0.26 |
| Beispiel 1 - 14 Tage | 2555 | 65.6 | 11 | 11.6 | 3.15 | 0.25 |
| Beispiel 1 - 28 Tage | 2376 | 60.9 | 7.79 | 7.79 | 1.97 | -0.07 |
| Beispiel 1 - 56 Tage | 2395 | 52.6 | 4.77 | 4.77 | 1.6 | -1.02 |
| Beispiel 2 - 0 Tage | 2980 | 67.2 | 8.54 | 25.7 | 5.04 | 0 |
| Beispiel 2 - 7 Tage | 2701 | 68 | 10.7 | 14.7 | 3.26 | 0.14 |
| Beispiel 2 - 14 Tage | 2497 | 64.3 | 11 | 11.6 | 3.02 | 0.13 |
| Beispiel 2 - 28 Tage | 2414 | 61.1 | 8.33 | 8.33 | 1.68 | -0.12 |
| Beispiel 2 - 56 Tage | 2403 | 44.5 | 3.04 | 3.04 | 1.59 | -0.91 |

## Patentansprüche

1. Thermoplastische Formmassen, enthaltend
A) 10 bis 99,98 Gew.-% eines Polyoxymethylenhomo- oder - copolymerisates,
B) 0,01 bis 5 Gew.-% eines Imidazols der allgemeinen Formel 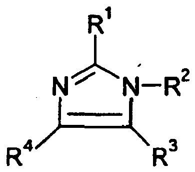 wobei die Reste R¹ bis R⁴ unabhängig voneinander folgende Bedeutung haben:
R¹ einen Alkylrest mit 1 bis 5 C-Atomen,
R² bis R⁴ Wasserstoff, einen Alkylrest mit 1 bis 5 C-Atomen,
C) 0,01 bis 5 Gew.-% eines Erdalkalioxides,
D) 0 bis 80 Gew.-% weiterer Zusatzstoffe,
wobei die Summe der Gewichtsprozente der Komponenten A) bis D) 100 % ergibt.

2. Thermoplastische Formmassen nach Anspruch 1, enthaltend als Komponente C) Magnesiumoxid.

3. Thermoplastische Formmassen nach den Ansprüchen 1 oder 2, in denen die Komponente C) weniger als 10000 ppm Metallverunreinigungen enthält.

4. Thermoplastische Formmassen nach den Ansprüchen 1 bis 3, in denen die Komponente C) eine mittlere Teilchengröße d₅₀ von 10 bis 200 µm aufweist.

5. Thermoplastische Formmassen nach den Ansprüchen 1 bis 4, wobei R¹ der Komponente B) einen Methylrest oder Ethylrest bedeutet.

6. Thermoplastische Formmassen nach den Ansprüchen 1 bis 5, wobei R², R³, R⁴ Wasserstoff oder Methylrest oder Ethylrest bedeuten.

7. Verwendung der thermoplastischen Formmassen gemäß den Ansprüchen 1 bis 6 zur Herstellung von Fasern, Folien und Formkörpern jeglicher Art.

8. Fasern, Folien und Formkörper jeglicher Art erhältlich aus den thermoplastischen Formmassen gemäß den Ansprüchen 1 bis 6.

## Claims

1. A thermoplastic molding material comprising
A) 10 to 99.98% by weight of a polyoxymethylene homo- or copolymer,
B) 0.01 to 5% by weight of an imidazole of the general formula 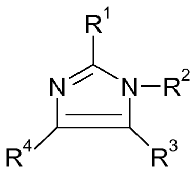 where the R¹ to R⁴ radicals are each independently defined as follows:
R¹ is an alkyl radical having 1 to 5 carbon atoms,
R² to R⁴ are each hydrogen, an alkyl radical having 1 to 5 carbon atoms,
C) 0.01 to 5% by weight of an alkaline earth metal oxide,
D) 0 to 80% by weight of further additives,
where the sum of the percentages by weight of components A) to D) adds up to 100%.

2. The thermoplastic molding material according to claim 1, comprising magnesium oxide as component C).

3. The thermoplastic molding material according to claim 1 or 2, in which component C) comprises less than 10 000 ppm of metal impurities.

4. The thermoplastic molding material according to claims 1 to 3, in which component C) has a mean particle size d₅₀ of 10 to 200 µm.

5. The thermoplastic molding material according to claims 1 to 4, wherein R¹ of component B) is a methyl radical or ethyl radical.

6. The thermoplastic molding material according to claims 1 to 5, wherein R², R³, R⁴ are each hydrogen or a methyl radical or ethyl radical.

7. The use of the thermoplastic molding materials according to claims 1 to 6 for producing fibers, films and moldings of any kind.

8. A fiber, film or molding of any kind, obtainable from the thermoplastic molding materials according to claims 1 to 6.

## Revendications

1. Matières à mouler thermoplastiques, contenant
A) 10 à 99,98 % en poids d'un homo- ou copolymérisat polyoxyméthylène,
B) 0,01 à 5 % en poids d'un imidazole de formule générale 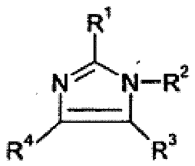 dans laquelle les radicaux R¹ à R⁴ ont indépendamment les uns des autres la signification suivante :
R¹ représente un radical alkyle ayant de 1 à 5 atomes de carbone,
R² à R⁴ représentent un atome d'hydrogène, un radical alkyle ayant de 1 à 5 atomes de carbone,
C) 0,01 à 5 % en poids d'un oxyde de métal alcalinoterreux,
D) 0 à 80 % en poids d'autres additifs,
la somme des pourcentages en poids des composants A) à D) étant égale à 100 %.

2. Matières à mouler thermoplastiques selon la revendication 1, contenant en tant que composant C) de l'oxyde de magnésium.

3. Matières à mouler thermoplastiques selon la revendication 1 ou 2, dans lesquelles le composant C) contient moins de 10 000 ppm d'impuretés métalliques.

4. Matières à mouler thermoplastiques selon les revendications 1 à 3, dans lesquelles le composant C) présente une taille moyenne de particule d₅₀ de 10 à 200 µm.

5. Matières à mouler thermoplastiques selon les revendications 1 à 4, dans lesquelles R¹ du composant B) représente un radical méthyle ou un radical éthyle.

6. Matières à mouler thermoplastiques selon les revendications 1 à 5, dans lesquelles R², R³, R⁴ représentent un atome d'hydrogène ou le radical méthyle ou le radical éthyle.

7. Utilisation des matières à mouler thermoplastiques selon les revendications 1 à 6, pour la production de fibres, films et corps moulés de tout type.

8. Fibres, films et corps moulés de tout type, pouvant être obtenus à partir des matières à mouler thermoplastiques selon les revendications 1 à 6.
